# DEMANDE DE BREVET EUROPEEN

(11) **EP 0 943 375 A1**
(43) Date de publication de la demande: **22.09.1999**
(21) Numéro de dépôt: 97203405.2
(22) Date de dépôt: 03.11.1997
(51) Int. Cl.: B09C 1/00, E21B 43/12, E21B 43/38

(54) **Procédé et installation d'assainissement de sol**

(71) Demandeur: Watco Remediation Services N.V., 1120 Bruxelles (BE)
(72) Inventeur: Mackelbert, Ilya, 1050 Bruxelles (BE)
(74) Mandataire: Powis de Tenbossche, Roland

(57) **Abrégé**

Procédé d'assainissement de sol contaminé par des produits contaminants liquides de densité inférieure à 1 et formant au moins partiellement une phase distincte par rapport à l'eau, dans lequel on prévoit dans le sol (3) à assainir une série de puits (2) distincts aptes à collecter de l'eau et des produits contaminants liquides formant une phase à la surface de l'eau collectée, dans lequel on place dans chacun des dits puits (2) un récipient (1) présentant une extrémité inférieure, une extrémité supérieure et une ouverture (0) adjacente de son extrémité tournée vers le bas, dans lequel on remplit ledit récipient (1) au moyen d'eau, dans lequel on amène l'ouverture (0) de chaque récipient (1) au niveau de la phase de contaminants liquides ou dans lequel on amène la phase de contaminants liquides au niveau de l'ouverture (O) de chaque récipient de manière à ce que cette phase monte dans le récipient (1) vers son extrémité supérieure, dans lequel lorsque le récipient (1) contient un volume déterminé de contaminants liquides, on pompe au moins partiellement ce volume hors du récipient (1).

## Description

La présente invention a pour objet un procédé d'assainissement de sol contaminé par des produits contaminants liquides de densité inférieure à 1 et formant au moins partiellement une phase distincte par rapport à l'eau, dans lequel on prévoit dans le sol à assainir une série de puits distincts apte à collecter de l'eau et des produits contaminants liquides formant une phase à la surface de l'eau collectée.

On connaît un procédé du type décrit ci-avant dans lequel on place dans chacun des puits une pompe immergée destinée à pomper hors du puits l'eau et les contaminants liquides. Un tel procédé est coûteux, car il implique l'utilisation de pompes réalisées en acier inoxydable, l'amenée de courant électrique aux pompes, une consommation d'énergie importante car une grande quantité d'eau doit être pompée pour évacuer les contaminants liquides, un risque de formation d'un gel dans la pompe, une nécessité de retirer les pompes hors du puits pour assurer leur maintenance ou leur réparation.

Le procédé suivant l'invention vise à remédier à ces inconvénients et a pour objet un procédé consommant une quantité d'énergie minimale pour le pompage d'eau et contaminants liquides.

Le procédé selon l'invention est un procédé d'assainissement de sol contaminé par des produits contaminants liquides de densité inférieure à 1 et formant au moins partiellement une phase distincte par rapport à l'eau,
· dans lequel on prévoit dans le sol à assainir une série de puits distincts apte à collecter de l'eau et des produits contaminants liquides formant une phase à la surface de l'eau collectée,
· dans lequel on place dans chacun des dits puits un récipient présentant une extrémité inférieure, une extrémité supérieure et une ouverture adjacente de son extrémité tournée vers le bas,
· dans lequel on remplit ledit récipient au moyen d'eau,
· dans lequel on amène l'ouverture de chaque récipient au niveau de la phase de contaminants liquides ou dans lequel on amène la phase de contaminants liquides au niveau de l'ouverture de chaque récipient de manière à ce que cette phase monte dans le récipient vers son extrémité supérieure,
· dans lequel lorsque le récipient contient un volume déterminé de contaminants liquides, on pompe au moins partiellement ce volume hors du récipient.

De préférence, on pompe de l'eau hors du puits pour amener la phase de contaminants liquides au niveau de l'ouverture du récipient placé dans ledit puits. De façon particulièrement avantageuse, on arrête de pomper hors du puits tant que la phase liquide est au niveau de l'ouverture du récipient placé dans ledit puits.

Selon une forme de réalisation possible, on déplace dans le puits le récipient ou une pièce associée à celui-ci pour amener l'ouverture du récipient au niveau de la phase de contaminants liquides. De préférence, on arrête de déplacer dans le puits le récipient ou une pièce associée à celui-ci tant que l'ouverture est au niveau de la phase de contaminants liquides.

Selon un détail d'une forme de réalisation possible, dès que le récipient contient un volume déterminé de contaminants liquides et dès que l'ouverture est suffisamment plongée dans de l'eau, on pompe au moins partiellement un volume de liquide hors du récipient, tandis que dès que l'ouverture n'est plus sensiblement plongée dans de l'eau, on arrête de pomper du liquide hors du récipient. De façon avantageuse, lors du pompage du liquide hors du récipient, on introduit de l'eau dans le puits.

Selon un détail d'une autre forme de réalisation, entre deux étapes successives aux cours desquelles dans un puits on amène l'ouverture du récipient au niveau de la phase de contaminants liquides ou on amène la phase de contaminants liquides au niveau de l'ouverture du récipient de manière à ce que cette phase monte dans le récipient vers son extrémité supérieure, on laisse le puits se remplir par de l'eau et des contaminants liquides provenant du sol à assainir.

Il peut être avantageux que l'on place le récipient dans le puits à une position déterminée adjacente du fond du puits. Par exemple, l'ouverture du récipient est située à une distance d'au moins 50 cm du fond du puits. De préférence, l'ouverture du récipient est située au plus à 100 cm du fond du puits.
Dans le procédé suivant l'invention, on forme avantageusement des puits présentant une paroi latérale perméable aux liquides. De préférence, on munit le fond des puits d'une cuve imperméable et/ou d'une cuve dont la section transversale horizontale diminue au plus on se rapproche du fond de celle-ci.

L'invention a encore pour objet une installation pour la mise en oeuvre d'un procédé suivant l'invention, ladite installation comprenant :
· une série de récipients présentant une ouverture inférieure, lesdits récipients étant placés dans une série de puits prévus dans le sol à assainir;
· un ou des dispositifs de pompage;
· une série de tuyauteries reliant chaque récipient à un dispositif de pompage;
· une série de tuyauteries débouchant dans chacun des puits et reliées à un ou des dispositifs de pompage;
· pour chaque récipient, un détecteur de niveau haut de liquides contaminants et un détecteur de niveau bas de liquides contaminants dans le puits ou dans le récipient;
· une unité de commande du ou des dispositifs de pompage, assurant le pompage de liquide hors d'un puits après une absence de détection de contaminants liquides par le détecteur de niveau bas du récipient placé dans ledit puits, l'arrêt du pompage de liquide hors du puits après ou dès la détection de contaminants liquides par le détecteur de niveau bas, et le pompage de liquide hors du récipient après ou dès que la détection de liquides contaminants par le détecteur de niveau haut.

De préférence, l'unité de commande comporte une minuterie ou un temporisateur arrêtant le pompage de liquide hors du récipient après une période de temps déterminée.

De façon avantageuse, l'unité de commande assure l'injection d'eau par une tuyauterie débouchant dans le puits lorsqu'elle commande le pompage de liquide hors du récipient.

Selon une forme de réalisation, l'installation comporte au moins une pompe à vide reliée par une canalisation à chacun des récipients pour créer un vide à l'intérieur du récipient et une aspiration de liquide dans le récipient par l'ouverture inférieure de celui-ci.

Selon une particularité d'une forme de réalisation, l'unité de commande comporte une minuterie ou un temporisateur assurant le pompage d'eau hors du puits de manière intermittente.

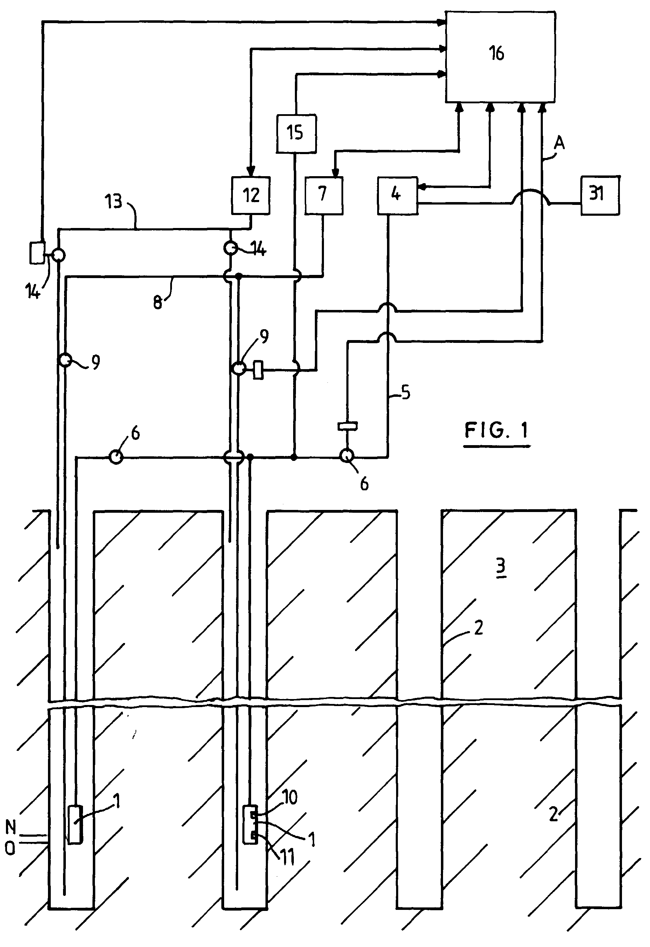

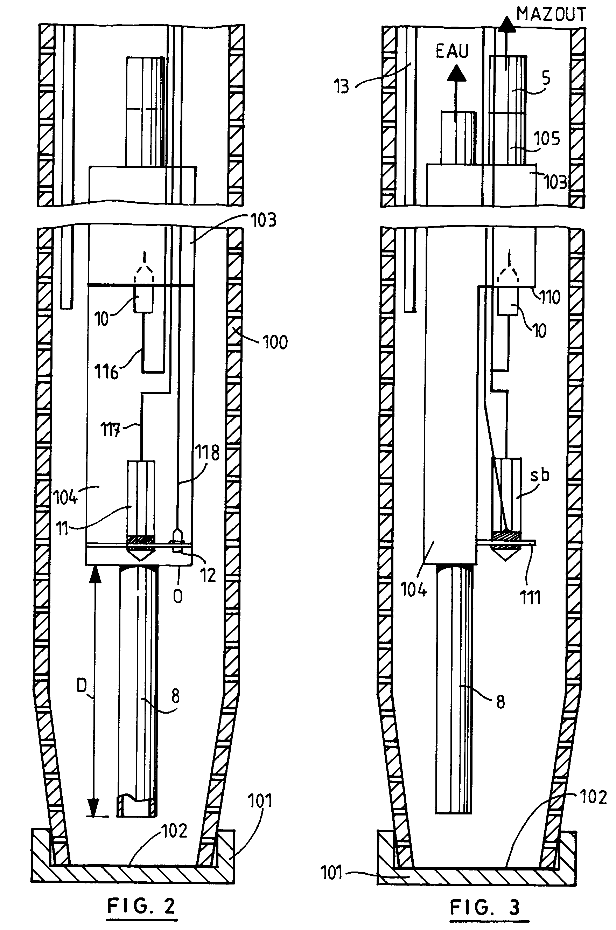

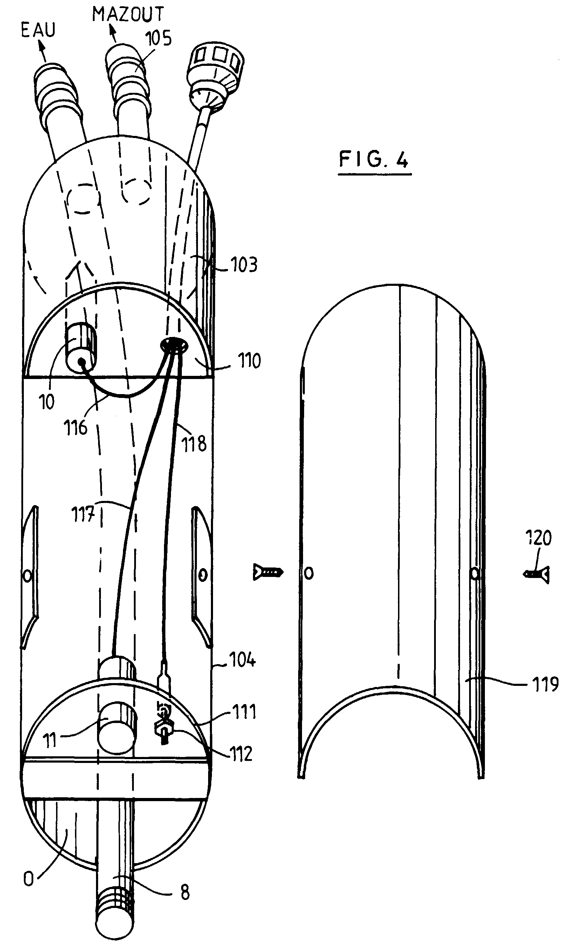

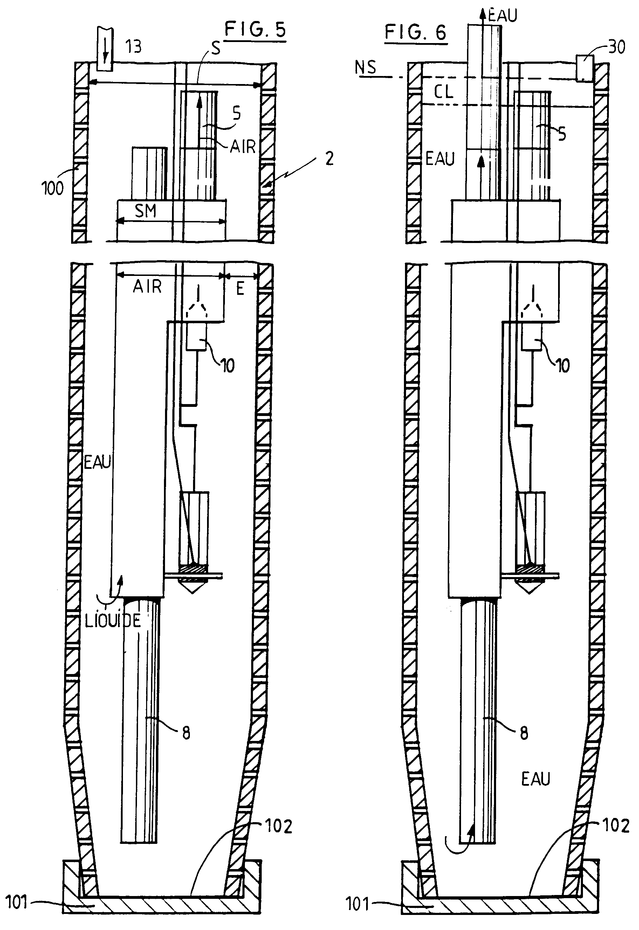

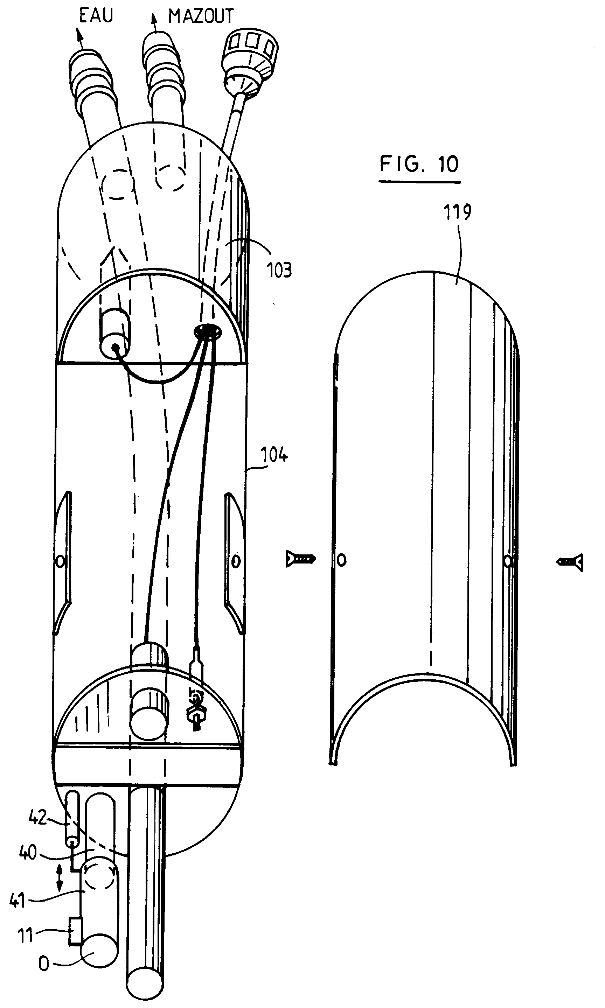

Des particularités et détails de l'invention ressortiront de la description suivante dans laquelle il est fait référence aux dessins ci-annexes. Dans ces dessins,
■ la figure 1 est une vue schématique d'une installation préférée suivant l'invention;
■ les figures 2 et 3 sont des vues particulières d'un récipient placé dans un puits;
■ la figure 4 est une vue en perspective du récipient montré aux figures 2 et 3;
■ les figures 5 à 9 montrent des étapes du procédé utilisant une installation suivant la figure 1;
■ la figure 10 est une vue schématique d'une forme de réalisation particulière d'un autre récipient.

L'installation pour la mise en oeuvre d'un procédé suivant l'invention, ladite installation comprend :
· une série de récipients 1 présentant une ouverture inférieure, lesdits récipients 1 étant placés dans une série de puits 2 prévus dans le sol 3 à assainir;
· un premier dispositif de pompage 4;
· une série de tuyauteries 5 reliant la partie supérieure de chaque récipient 1 au premier dispositif de pompage 4, ces tuyauteries et dispositif de pompage permettant de pomper du liquide ou des liquides hors des récipients 1 ;
· des vannes commandées 6, par exemple pneumatiques, montées sur les tuyauteries 5 pour permettre le pompage de liquides hors de certains récipients particuliers et le non pompage de liquides hors de certains autres récipients 1;
· un deuxième dispositif de pompage 7;
· une série de tuyauteries 8 débouchant dans chacun des puits 2 et reliées au deuxième dispositif de pompage, pour permettre de vider un ou des puits pour abaisser le niveau de liquide dans chaque puits considéré à un niveau N correspondant sensiblement au niveau de l'ouverture inférieure O du récipient dans ledit puits, ce niveau N est en réalité un rien supérieur au niveau O (par exemple de 1 à 3 cm);
· des vannes commandées 9, par exemple pneumatiques, montées sur les tuyauteries 8 pour permettre de vider un ou des puits et ne pas vider un ou d'autres puits;
· pour chaque récipient 1, un détecteur de niveau haut 10 de liquides contaminants et un détecteur de niveau bas 11 de liquides contaminants dans le puits ;
· un troisième dispositif de pompage 12 relié à chaque puits 2 par des canalisations 13 munies de vannes commandées 14, ce dispositif étant destiné à injecter de l'eau dans le puits ou des puits;
· une pompe à vide 15 reliée par une canalisation (par exemple par les tuyauteries 5) à chacun des récipients 1 pour créer un vide à l'intérieur du récipient et une aspiration de liquide dans le récipient par l'ouverture inférieure de celui-ci, aspiration suffisante pour amener le niveau de liquide dans chaque récipient au-dessus du détecteur de niveau haut de liquides contaminants;
· une unité de commande 16 des dispositifs de pompage 4,7,12, de la pompe à vide 15, des vannes 6,9 14 pour permettre des opérations de pompages différentes ou identiques dans les puits (cette unité 16 est reliée aux dites pompes, vannes et aux capteurs 10,11 par des lignes de transfert d'information, par exemple des fils électriques A).

L'unité de commande du ou des dispositifs de pompage, assure pour chaque puits,
· le pompage de liquide hors d'un puits après une absence de détection de contaminants liquides par le détecteur de niveau bas du récipient placé dans ledit puits et/ou après une période de temps déterminé au cours de laquelle le puits se remplit à nouveau par des liquides provenant du sol,
· l'arrêt du pompage de liquide hors du puits après ou dès la détection de contaminants liquides par le détecteur de niveau bas,
· le pompage de liquide hors du récipient après ou dès que la détection de liquides contaminants par le détecteur de niveau haut, et
· l'injection d'eau par une tuyauterie débouchant dans le puits lorsqu'elle commande le pompage de liquide hors du récipient.

L'unité 16 de commande comporte une minuterie ou un temporisateur 17 arrêtant le pompage de liquide hors du récipient après une période de temps déterminée.

Les figures 2 et 3 montrent en coupe le fond d'un puits 2 muni d'un récipient 1, tandis que la figure 4 est une vue en perspective du récipient 1. Le puits 1 est formé par un trou longitudinal dont la paroi latérale 100 est formée par une gaine perméable aux liquides. Le fond du puits est avantageusement imperméable et est formé par une cuvette 101. Dans la forme de réalisation représentée, la section transversale de la partie du puits adjacente de son fond 102 décroît au plus on se rapproche de celui-ci. Cette forme est avantageuse, car le fond du puits atteint plus rapidement le niveau de l'ouverture du récipient 1. L'ouverture inférieure O du récipient réalisé en matière plastique (PVC, polycarbonate, ...) se trouve par exemple à 75 cm du fond du puits. Le récipient 1 définit une chambre 103 sensiblement cylindrique prolongée par un conduit 104 de section semi-circulaire. La partie inférieure d'une canalisation 8 pour le pompage de liquide hors du puits traverse la chambre 103 et la conduit 104. L'extrémité libre de la canalisation 8 est adjacente du fond du puits , mais est de préférence située à une distance suffisante de celui-ci pour éviter que cette extrémité ne soit plongée dans un dépôt de particules solides. Cette extrémité libre de la canalisation est située en-dessous de l'ouverture O du récipient. De préférence la distance verticale D entre l'ouverture O du récipient 1 et l'ouverture de l'extrémité libre de la canalisation 8 est d'au moins 10 cm ( par exemple entre 20 et 50 cm). La partie supérieure du récipient est munie d'un embout 105 formant un passage entre la chambre 103 et la tuyauterie 5 pour aspirer hors du récipient des liquides. La sonde haute 10 détermine la présence de liquides contaminants dans la chambre 103 ou plus exactement le moment auquel la chambre est sensiblement complètement remplie de liquides contaminants. La sonde basse est située à proximité de l'ouverture O du récipient 1. Les sondes 10, 11 sont portées par deux plateaux 110,111 percés d'un trou. Le plateau inférieur 111 porte également l'extrémité d'un conducteur électrique 112 destiné à former une masse ou une référence pour la sonde haute 10. Les informations (impulsions électriques) provenant des sondes sont envoyées par des câbles 116,117 vers l'unité de commande 16, cette dernière étant également connectée par un câble 118 à la masse 112. Un couvercle 119 permet de refermer l'espace ou volume situé entre les deux plateaux 110,111. Ce couvercle est par exemple fixé au moyen de vis 120.

L'installation montrée à la figure 1 permet la mise en oeuvre d'un procédé d'assainissement de sol contaminé par des produits contaminants liquides de densité inférieure à 1 et formant au moins partiellement une phase distincte par rapport à l'eau, dans lequel on prévoit dans le sol à assainir une série de puits distincts aptes à collecter de l'eau et des produits contaminants liquides formant une phase à la surface de l'eau collectée, dans lequel on place dans chacun des dits puits un récipient présentant une extrémité inférieure une extrémité supérieure et une ouverture adjacente de son extrémité tournée vers le bas, dans lequel on remplit ledit récipient au moyen d'eau, dans lequel on amène l'ouverture de chaque récipient au niveau de la phase de contaminants liquides ou dans lequel on amène la phase de contaminants liquides au niveau de l'ouverture de chaque récipient de manière à ce que cette phase monte dans le récipient vers son extrémité supérieure, dans lequel lorsque le récipient contient un volume déterminé de contaminants liquides, on pompe au moins partiellement ce volume hors du récipient.

Les figures 5 à 9 montrent des étapes du procédé pour un récipient 1 placé dans un puits 2.
Le puits 2 a une section transversale S sensiblement circulaire de diamètre compris entre 5 et 15 cm, par exemple environ 10cm. Le récipient a une section transversale maximale SM inférieure à la section transversale du puits de manière à pouvoir le glisser dans ledit puits. Cette section SM est avantageusement circulaire et a un diamètre avantageusement tel qu'un espacement E de 0,5 à 1,5 cm est créé entre la partie sensiblement cylindrique du récipient 1 et la paroi interne du puits 2.

Lorsqu'on introduit le récipient 1 dans le puits 2, le récipient est plongé dans du liquide présent dans le puits. Le récipient et/ou le conduit 5 restent au moins partiellement remplis d'air. On aspire cet air par le conduit 5 et la pompe à vide 15. Lors de cette mise sous vide, du liquide du puits entre dans le récipient 1 par son ouverture inférieure O et passe ensuite dans le conduit 5 . (flèche air, flèche liquide) (voir figure 5) Eventuellement, lors de cette phase d'amorçage, on injecte de l'eau dans le puits par la canalisation 13 (flèche Eau).

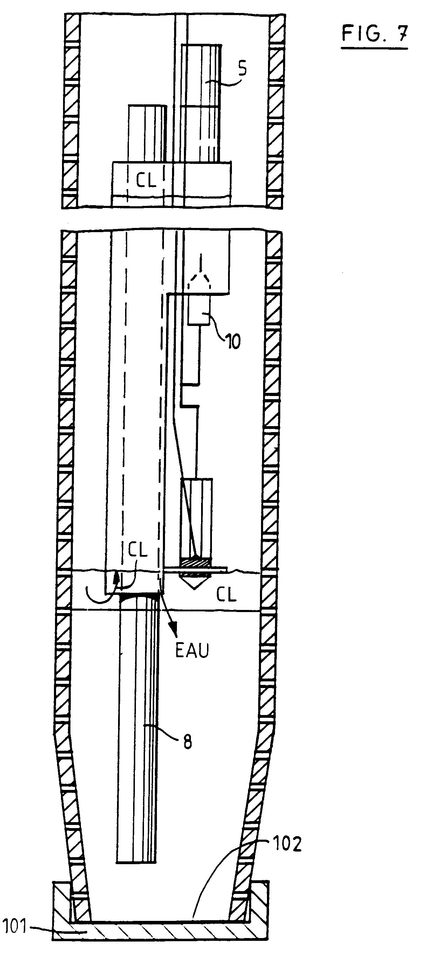

Lorsque la phase d'amorçage du récipient est terminée, on laisse le puits se remplir de liquides traversant les parois latérales du puits 2. Lorsque le niveau de liquide dans le puits a atteint un niveau supérieur NS, par exemple détecté par un capteur 30, ou de préférence après une période de temps déterminée on pompe du liquide (eau) hors du puits par le conduit 13. On arrête l'opération de pompage d'eau hors du puits dès que la présence de contaminants liquides ou d'air est détectée par la sonde 11. (figure 7) A ce moment, si une phase de contaminants liquides (CL) flotte à la surface de l'eau du puits, cette phase de contaminants liquides est aspirée dans le récipient, alors que de l'eau du récipient est refoulée dans le puits. La phase de contaminants liquides est ainsi amenée dans la partie supérieure du récipient 1 pour former un volume V de contaminants liquides dans le récipient. Le transfert de contaminants liquides dans le récipient est dû à la différence de densité du contaminant liquide par rapport à l'eau, de sorte que naturellement le contaminant liquide se déplace vers le haut pour flotter au-dessus de l'eau.

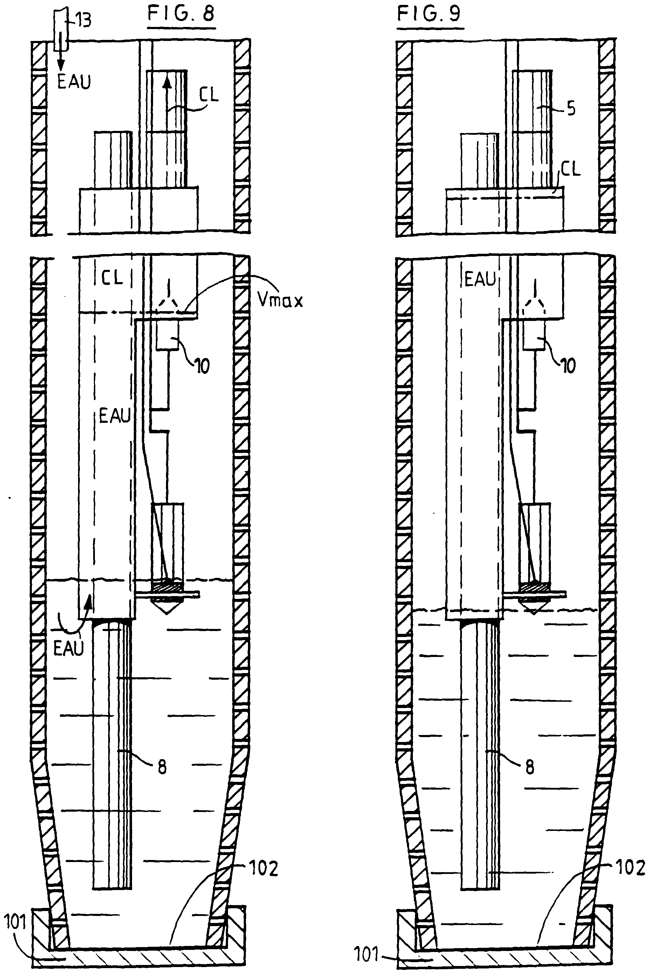

Le puits 1 se remplit à nouveau et on répète les étapes de pompage d'eau hors du puits et de transfert de contaminants liquides dans le puits 2 jusqu'à ce que la sonde 10 détecte des contaminants liquides, c'est-à-dire un volume Vmax de contaminants liquides dans le récipient 1. (figure 8) A ce moment, on pompe la phase de contaminants liquides hors du récipient 1 grâce à la pompe 4 et à la canalisation 5 pour l'amener vers une cuve 31. Lors de ce pompage, de l'eau est aspirée dans le récipient 1 par son ouverture O. Pour éviter que l'ouverture O ne soit plus plongée dans de l'eau, il est avantageux lors de cette étape de pompage d'injecter par la conduite 13 de l'eau dans le puits. Le débit d'eau injectée correspond avantageusement sensiblement au débit de contaminants liquides pompés hors du récipient 1, de manière à assurer que le puits 2 contienne une quantité d'eau suffisante pour remplacer dans le récipient le volume de contaminants liquides pompés.
Après une durée de pompage déterminée pour évacuer au moins la majeure partie de contaminants liquides hors du récipient 1, on arrête le fonctionnement de la pompe 4 et on arrête l'injection de liquide (eau) dans le puits 2.(figure 9)

Le cycle peut ensuite continuer par des étapes de remplissage du puits par des liquides traversant la paroi latérale du puits 2, de vidange d'eau hors du puits, de transfert de contaminants liquides dans le récipient, etc.

Le dispositif de contrôle 16 contrôle pour les différents récipients 1 placés dans les puits 2, (et ce avantageusement de manière indépendante) les étapes de pompage d'eau hors des puits, la vidange de contaminants liquides hors des récipients avec de préférence injection d'eau dans le puits.

Selon une forme de réalisation possible, le conduit 8 d'aspiration d'eau hors du puits est muni à son extrémité libre d'un clapet anti-retour, ce clapet permettant d'assurer que la conduit 8 ne se décharge par lui-même dans le puits lors d'un arrêt de la pompe 7. De manière similaire la canalisation 5 est avantageusement munie au voisinage de son extrémité adjacente du récipient 1, d'un clapet anti-retour évitant le passage de liquide de la canalisation vers le récipient 1. De tels clapets anti-retour permettent de garder sans effort une colonne de liquide dans les canalisations et donc de faciliter le fonctionnement des pompes 4 et 7.

Dans l'installation suivant l'invention, les pompes sont avantageusement placées en surface, de manière à faciliter leur maintenance et de manière a éviter de devoir plonger des pièces mécaniques en rotation.

Bien que dans l'installation représentée à la figure 1, deux pompes distinctes sont utilisées pour le pompage et l'injection d'eau hors du puits ou dans le puits, une même pompe aurait pu être utilisée.

Ainsi, qu'on peut le remarquer le pompage hors du puits d'eau et de contaminants liquides est sélectif, ceci permettant de réduire au maximum l'énergie de pompage requise.

Dans la forme de réalisation de la figure 10 qui est similaire à celle de la figure 1, l'ouverture O pour l'aspiration de contaminants liquides de densité inférieure à celle de l'eau (par exemple un ou des hydrocarbures, en particulier du mazout) est prolongée par un conduit 40 associée à une partie mobile 41 de manière à pouvoir positionner le niveau de l'ouverture d'aspiration dans le puits. Le déplacement de la partie mobile est commandé par exemple par un vérin 42 commandé par l'unité de contrôle 16. Dans cette forme de réalisation le capteur 11 est avantageusement monté sur le tube mobile 41. Cette forme de réalisation est avantageuse car elle permet de maintenir, au moins pour une période de temps, l'ouverture au voisinage de la phase de contaminants liquides sans pompage d'eau hors du puits et malgré le remplissage naturel du puits par de l'eau et autres liquides provenant du sol.

L'installation représentée à la figure 1 permet d'assainir des sols pollués par des hydrocarbures, tels que mazout, pétrole, etc., par d'autres contaminants liquides de densité inférieure à 1 et de préférence sensiblement non miscible à l'eau de manière à pouvoir former une phase distincte d'une phase aqueuse ou une phase riche en contaminants liquides.

## Revendications

1. Procédé d'assainissement de sol contaminé par des produits contaminants liquides de densité inférieure à 1 et formant au moins partiellement une phase distincte par rapport à l'eau, dans lequel on prévoit dans le sol à assainir une série de puits distincts apte à collecter de l'eau et des produits contaminants liquides formant une phase à la surface de l'eau collectée, dans lequel on place dans chacun des dits puits un récipient présentant une extrémité inférieure, une extrémité supérieure et une ouverture adjacente de son extrémité tournée vers le bas, dans lequel on remplit ledit récipient au moyen d'eau, dans lequel on amène l'ouverture de chaque récipient au niveau de la phase de contaminants liquides ou dans lequel on amène la phase de contaminants liquides au niveau de l'ouverture de chaque récipient de manière à ce que cette phase monte dans le récipient vers son extrémité supérieure, dans lequel lorsque le récipient contient un volume déterminé de contaminants liquides, on pompe au moins partiellement ce volume hors du récipient.

2. Procédé suivant la revendication 1, caractérisé en ce qu'on pompe de l'eau hors du puits pour amener la phase de contaminants liquides au niveau de l'ouverture du récipient placé dans ledit puits.

3. Procédé suivant la revendication 2, caractérisé en ce qu'on arrête de pomper de l'eau hors du puits tant que ou dès que le niveau de la phase liquide dans le puits est sensiblement au niveau de l'ouverture du récipient placé dans ledit puits.

4. Procédé suivant la revendication 1, caractérisé en ce qu'on déplace dans le puits le récipient ou une pièce associée à celui-ci pour amener l'ouverture du récipient au niveau de la phase de contaminants liquides.

5. Procédé suivant la revendication 4, caractérisé en ce qu'on arrête de déplacer dans le puits le récipient ou une pièce associé à celui-ci tant que l'ouverture est au niveau de la phase de contaminants liquides.

6. Procédé suivant la revendication 1, caractérisé en ce que, dès que le récipient contient un volume déterminé de contaminants liquides et dès que l'ouverture est suffisamment plongée dans de l'eau, on pompe au moins partiellement un volume de liquide hors du récipient et en ce que dès que l'ouverture n'est plus sensiblement plongée dans de l'eau, on arrête de pomper du liquide hors du récipient.

7. Procédé suivant la revendication 6, caractérisé en ce que, lors du pompage du liquide hors du récipient, on introduit de l'eau dans le puits.

8. Procédé suivant la revendication 1, caractérisé en ce qu'entre une deux étapes successives aux cours desquelles dans un puits on amène l'ouverture du récipient au niveau de la phase de contaminants liquides ou on amène la phase de contaminants liquides au niveau de l'ouverture du récipient de manière à ce que cette phase monte dans le récipient vers son extrémité supérieure, on laisse le puits se remplir par de l'eau et des contaminants liquides provenant du sol à assainir.

9. Procédé suivant la revendication 1, caractérisé en ce qu'on place le récipient dans le puits à une position déterminée adjacente du fond du puits.

10. Procédé suivant la revendication 9, caractérisé en ce que l'ouverture du récipient est située à une distance d'au moins 50 cm du fond du puits.

11. Procédé suivant la revendication 10, caractérisé en ce que l'ouverture du récipient est située au plus à 100 cm du fond du puits.

12. Procédé suivant l'une des revendications précédentes, caractérisé en ce qu'on forme des puits présentant une paroi latérale perméable aux liquides.

13. Procédé suivant la revendication 12, caractérisé en ce qu'on munit le fond des puits d'une cuve imperméable.

14. Procédé suivant la revendication 13, caractérisé en ce qu'on munit le fond de chaque puits d'une cuve dont la section transversale horizontale diminue au plus on se rapproche du fond de celle-ci.

15. Installation pour la mise en oeuvre d'un procédé suivant l'invention, ladite installation comprenant :
· une série de récipients présentant une ouverture inférieure, lesdits récipients étant placés dans une série de puits prévus dans le sol à assainir;
· un ou des dispositifs de pompage;
· une série de tuyauteries reliant chaque récipient à un dispositif de pompage;
· une série de tuyauteries débouchant dans chacun des puits et reliées à un ou des dispositifs de pompage;
· pour chaque récipient, un détecteur de niveau haut de liquides contaminants et un détecteur de niveau bas de liquides contaminants dans le puits ou dans le récipient;
· une unité de commande du ou des dispositifs de pompage, assurant le pompage de liquide hors d'un puits après une absence de détection de contaminants liquides par le détecteur de niveau bas du récipient placé dans ledit puits, l'arrêt du pompage de liquide hors du puits après ou dès la détection de contaminants liquides par le détecteur de niveau bas, et le pompage de liquide hors du récipient après ou dès que la détection de liquides contaminants par le détecteur de niveau haut.

16. Installation suivant la revendication 15, caractérisée en ce que l'unité de commande comporte une minuterie ou un temporisateur arrêtant le pompage de liquide hors du récipient après une période de temps déterminée.

17. Installation suivant la revendication 15 ou 16, caractérisée en ce que l'unité de commande assure l'injection d'eau par une tuyauterie débouchant dans le puits lorsqu'elle commande le pompage de liquide hors du récipient.

18. Installation suivant l'une des revendications 15 à 17, caractérisée en ce que elle comporte au moins une pompe à vide reliée par une canalisation à chacun des récipients pour créer un vide à l'intérieur du récipient et une aspiration de liquide dans le récipient par l'ouverture inférieure de celui-ci.

19. Installation suivant l'une des revendications 15 à 18, caractérisé en ce que l'unité de commande comporte une minuterie ou un temporisateur assurant le pompage d'eau hors du puits de manière intermittente.
